# EUROPEAN PATENT APPLICATION

(11) **EP 4 810 244 A1**
(43) Date of publication of application: **23.09.2026**
(21) Application number: 26161493.7
(22) Date of filing: 27.02.2026
(51) Int. Cl.: B32B 5/02, D03D 15/00, D03D 15/20, D03D 25/00, F24F 6/04, F24F 13/00, D03D 15/37

(54) **HUMIDIFYING WOVEN FABRIC, CORE MATERIAL, AND HUMIDIFIER**

(30) Priority: 12.03.2025 CN 202520433023 U
(71) Applicant: Shenzhen Chenbei Technology Co., Ltd., Shenzhen, Guangdong 518000 (CN)
(72) Inventor: ZHU, Dehong, SHENZHEN, 518000 (CN)
(74) Representative: Bayramoglu et al.

(57) **Abstract**

The present disclosure provides a humidifying woven fabric, a core material, and a humidifier. The humidifying woven fabric includes a first mesh layer and a second mesh layer, where the first mesh layer is spaced apart from the second mesh layer; a connecting fiber is disposed between the first mesh layer and the second mesh layer; the first mesh layer, the second mesh layer and the connecting fiber have a water retentivity; the water retentivity of the connecting fiber is greater than or equal to the water retaining capacity per unit weight being 1.2 g/g; and the water retentivity of the first mesh layer is greater than or equal to the water retaining capacity per unit weight being 1.2 g/g.

## Description

### TECHNICAL FIELD

The present disclosure relates to the technical field of air treatment, and in particular, to a humidifying woven fabric, a core material, and a humidifier.

### BACKGROUND

A humidifier includes a fan assembly, a water sprinkler, and a core material. The water sprinkler is configured to sprinkle water onto the core material, such that a humidifying woven fabric in the core material is wetted. The fan assembly is configured to blow air toward the humidifying woven fabric. As the air passes through the humidifying woven fabric, the water on the humidifying woven fabric is evaporated. The evaporated moisture is blown out of the humidifier with the air to humidify the outside space. The performance of the humidifying woven fabric greatly affects the humidification effect of the humidifier. How to provide a humidifying woven fabric with a more uniform humidification effect and higher humidification efficiency has become a challenge in the industry.

### SUMMARY

According to an aspect of the present disclosure, a humidifying woven fabric is provided. The humidifying woven fabric includes a first mesh layer and a second mesh layer, where the first mesh layer is spaced apart from the second mesh layer; a connecting fiber is disposed between the first mesh layer and the second mesh layer; the first mesh layer, the second mesh layer and the connecting fiber have a water retentivity; the water retentivity of the connecting fiber is greater than or equal to the water retaining capacity per unit weight being 1.2 g/g; and the water retentivity of the first mesh layer is greater than or equal to the water retaining capacity per unit weight being 1.2 g/g.

Since the first mesh layer, the second mesh layer and the connecting fiber have the water retentivity, the humidifying woven fabric provided by the present disclosure can better absorb the water to become wet, thereby achieving a desirable humidification effect. The water retentivity of the connecting fiber is greater than or equal to the water retaining capacity per unit weight being 1.2 g/g. On one hand, since the connecting fiber can communicate with the first mesh layer and the second mesh layer, the water can flow between the first mesh layer and the second mesh layer to balance the water content on the first mesh layer and the second mesh layer, achieving a more uniform humidification effect. On the other hand, due to the desirable water retentivity of the connecting fiber, the connecting fiber has a higher water content to release a larger amount of moisture. While the connecting fiber transfers the water between different mesh layers, the water in the first mesh layer, the second mesh layer and the connecting fiber can be evaporated into the moisture to provide a larger total surface area. Therefore, the humidifying woven fabric has the higher humidification efficiency and the better humidification effect.

Exemplarily, a first opening is formed in the first mesh layer; a second opening is formed in the second mesh layer; the first opening at least partially corresponds to the second opening; and the connecting fiber is connected between an outer edge of the first opening and an outer edge of the second opening.

Exemplarily, the outer edge of the first opening is provided with a plurality of first holes; the outer edge of the second opening is provided with a plurality of second holes; and the connecting fiber extends between the first holes and the second holes.

Exemplarily, the water retaining capacity per unit weight of the connecting fiber ranges from 1.2 g/g to 2.8 g/g.

Exemplarily, the connecting fiber is a synthetic fiber; or,
the connecting fiber is a natural fiber; or,
the connecting fiber is a regenerated fiber.

Exemplarily, a concave-convex hydrophilic layer is formed on a surface of the connecting fiber.

Exemplarily, the concave-convex hydrophilic layer is made of silicon dioxide.

Exemplarily, the connecting fiber is provided with an antibacterial layer.

According to another aspect of the present disclosure, a core material configured for liquid impregnation is further provided. The core material includes the above humidifying woven fabric.

According to still another aspect of the present disclosure, a humidifier is further provided. The humidifier includes the core material.

The "Summary" section introduces a series of simplified concepts, which will be further elaborated in the "Detailed Description of the Embodiments" section. The "Summary" section of the present disclosure is not intended to limit the key and necessary technical features of the claimed technical solution or define the scope of protection of the claimed technical solution.

The advantages and features of the present disclosure will be described in detail below with reference to the accompanying drawings.

### BRIEF DESCRIPTION OF THE DRAWINGS

The following accompanying drawings of the present disclosure are incorporated herein as a part of the present disclosure to facilitate understanding of the present disclosure. The embodiments of the present disclosure and the descriptions thereof in the drawings serve to explain the principles of the present disclosure. In the drawings:
FIG. 1 is a schematic structural view of a humidifying woven fabric according to the present disclosure;
FIG. 2 is a partial schematic structural view of the humidifying woven fabric shown in FIG. 1;
FIG. 3 is a schematic structural view of a core material according to the present disclosure; and
FIG. 4 is a schematic structural view of a humidifier according to the present disclosure.

Reference numerals in the drawings are as follows:
1: core material, 10: humidifying woven fabric, 110: first mesh layer, 1110: first opening, 1120: outer edge of the first opening, 1130: first hole, 120: second mesh layer, 1210: second opening, 1220: outer edge of the second opening, 1230: second hole, and 130: connecting fiber.

### DETAILED DESCRIPTION OF THE EMBODIMENTS

In the following description, many details are given to provide a thorough understanding of the present disclosure. However, those skilled in the art can understand that the following description only exemplarily illustrates preferred embodiments of the present disclosure, and the present disclosure can be implemented without one or more of these details. In addition, in order to avoid confusion with the present disclosure, some technical features well known in the art are not described in detail.

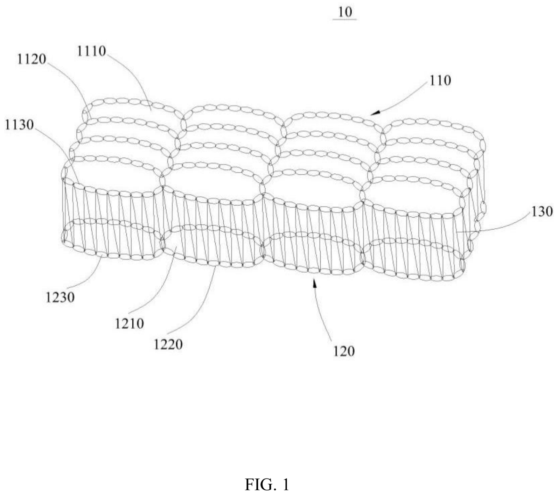

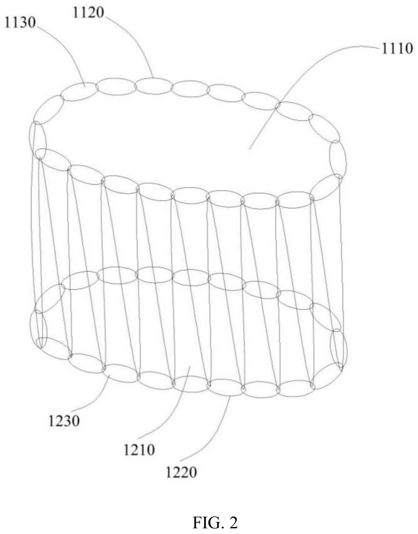

An embodiment of the present disclosure provides a humidifying woven fabric. Referring to FIGS. 1-2, the humidifying woven fabric 10 includes the first mesh layer 110 and the second mesh layer 120. The first mesh layer 110 is spaced apart from the second mesh layer 120. The connecting fiber 130 is disposed between the first mesh layer 110 and the second mesh layer 120. The first mesh layer 110 is located at an inner side of the second mesh layer 120. The first mesh layer 110 and the second mesh layer 120 are made of a same material, and are also made of different materials. The first mesh layer 110 and/or the second mesh layer 120 is a fabric made of yarns. The first mesh layer 110 and/or the second mesh layer 120 is made of a nylon fiber and a glass fiber. The first mesh layer 110, the second mesh layer 120 and the connecting fiber 130 have a water retentivity. The water retentivity of the connecting fiber 130 is greater than or equal to the water retaining capacity per unit weight being 1.2 g/g. The water retentivity of the first mesh layer 110 is greater than or equal to the water retaining capacity per unit weight being 1.2 g/g. The water retaining capacity per unit weight of the connecting fiber 130 is 1.2 g/g, 2.4 g/g, 2.8 g/g, or 3.4 g/g. The water retaining capacity per unit weight of the first mesh layer 110 is 1.2 g/g, 2.4 g/g, 2.8 g/g, or 3.4 g/g. The water retaining capacity per unit weight of the connecting fiber 130 is different from the water retaining capacity per unit weight of the first mesh layer 110. The water retentivity of the second mesh layer 120 is greater than or equal to the water retaining capacity per unit weight being 1.2 g/g. The water retaining capacity per unit weight of the second mesh layer 120 is 1.2 g/g, 2.4 g/g, 2.8 g/g, or 3.4 g/g. The water retaining capacity per unit weight of the connecting fiber 130 is different from the water retaining capacity per unit weight of the second mesh layer 120. The water retaining capacity per unit weight of each of the first mesh layer 110, the second mesh layer 120 and the connecting fiber 130 is in a range of 1-7 g/g. At least one of the first mesh layer 110, the second mesh layer 120 and the connecting fiber 130 is made of cotton, linen, polyester, nylon, or the like. The water retentivity of the hydrophilic fiber such as the cotton and the linen has the water retaining capacity per unit weight being 3-8 g/g. The water retentivity of the hydrophobic fiber such as the polyester and the nylon has the water retaining capacity per unit weight being 1-3 g/g.

When the humidifying woven fabric 10 is used, a water sprinkler is configured to sprinkle water onto the humidifying woven fabric 10, and the first mesh layer 110, the second mesh layer 120 and the connecting fiber 130 are wetted. A fan assembly is configured to blow air, such that the water in the first mesh layer 110, the second mesh layer 120 and the connecting fiber 130 is evaporated into moisture. The moisture flows to an outside space with the air, so as to humidify the outside space.

Since the first mesh layer 110, the second mesh layer 120 and the connecting fiber 130 have the water retentivity, the humidifying woven fabric can better absorb the water to become wet, thereby achieving a desirable humidification effect. The water retentivity of the connecting fiber 130 is greater than or equal to the water retaining capacity per unit weight being 1.2 g/g. On one hand, since the connecting fiber 130 can communicate with the first mesh layer 110 and the second mesh layer 120, the water can flow between the first mesh layer 110 and the second mesh layer 120 to balance the water content on the first mesh layer 110 and the second mesh layer 120, thereby achieving a more uniform humidification effect. On the other hand, due to the desirable water retentivity of the connecting fiber 130, the connecting fiber 130 has a higher water content to release a larger amount of moisture. While the connecting fiber 130 transfers the water between different mesh layers, the water in the first mesh layer 110, the second mesh layer 120 and the connecting fiber 130 can be evaporated into the moisture to provide a larger total surface area. Therefore, the humidifying woven fabric 10 has the higher humidification efficiency and the better humidification effect.

Referring to FIGS. 1-2, the first opening 1110 is formed in the first mesh layer 110, and the second opening 1210 is formed in the second mesh layer 120. The first opening 1110 and the second opening 1210 have a same shape, and also have different shapes. The first opening 1110 at least partially corresponds to the second opening 1210. The connecting fiber 130 is connected between the outer edge 1120 of the first opening and the outer edge 1220 of the second opening. The connecting fiber 130 is disposed between the outer edge 1120 of the first opening and the outer edge 1220 of the second opening, and the outer edge 1120 of the first opening and the outer edge 1220 of the second opening provide mounting conditions for the connecting fiber 130, such that the connecting fiber 130 is connected to the first mesh layer 110 and the second mesh layer 120 more stably. Along a flow direction of the moisture, the first opening 1110 partially overlaps with the second opening 1210. A flow channel is formed between the first opening 1110 and the second opening 1210. The moisture flows from the first opening 1110 to the second opening 1210 through the flow channel. The connecting fiber 130 is partially located in the flow channel. There are a plurality of first openings 1110 and a plurality of second openings 1210. At least one of the plurality of first openings 1110 corresponds to the second opening 1210.

Referring to FIGS. 1-2, the outer edge 1120 of the first opening is provided with a plurality of first holes 1130. The outer edge 1220 of the second opening is provided with a plurality of second holes 1230. The plurality of first holes 1130 have a same shape, and also have different shapes. The plurality of second holes 1230 have a same shape, and also have different shapes. The connecting fiber 130 extends between the plurality of first holes 1130 and the plurality of second holes 1230. The plurality of first holes 1130 are connected in sequence, and the connecting fiber 130 extends through an overlapping portion between two adjacent first holes 1130. The plurality of second holes 1230 are connected in sequence, and the connecting fiber 130 extends between two adjacent second holes 1230. The first holes 1130 can increase a surface area of the first mesh layer 110 to obtain a better humidification effect. The second holes 1230 can increase a surface area of the second mesh layer 120 to obtain a better humidification effect. The connecting fiber 130 extends between the first holes 1130 and the second holes 1230, such that the overall structure of the humidifying woven fabric 10 is more stable.

The water retaining capacity per unit weight of the connecting fiber 130 ranges from 1.2 g/g to 2.8 g/g. For example, the water retaining capacity per unit weight of the connecting fiber 130 is 1.2 g/g, 1.6 g/g, 2.0 g/g, 2.4 g/g, or 2.8 g/g. The water retentivity of the connecting fiber 130 is more moderate. During operation, the connecting fiber 130 has a more moderate water content, which can better balance the water transfer efficiency between the first mesh layer 110 and the second mesh layer 120, as well as the humidification effect of the humidifying woven fabric 10.

The connecting fiber 130 is a synthetic fiber. For example, the synthetic fiber is a polyester fiber, a polyamide fiber, a polyacrylonitrile fiber, a polypropylene fiber, a polyvinyl chloride fiber, or a polyvinyl acetal fiber. The synthetic fiber exhibits better strength and wear resistance, such that the humidifying woven fabric 10 can achieve a longer service life, more stable chemical properties, and a more stable humidification effect, thereby being applied to various application scenarios.

Alternatively, the connecting fiber 130 is a natural fiber. For example, the natural fiber is cotton, wool, silk, linen, or the like. The natural fiber can exhibit better hydrophilicity and water retentivity, and can quickly absorb the water and remain wet for a long time. During humidification, it can stably release moisture to achieve a more stable humidification effect.

Alternatively, the connecting fiber 130 is a regenerated fiber. For example, the regenerated fiber is a Lyocell fiber, a viscose fiber, or the like. The regenerated fiber exhibits desirable hydrophilicity and water retentivity, and can quickly absorb the water and retain it for a certain period, achieving a stable humidification effect.

A concave-convex hydrophilic layer (not shown) is formed on a surface of the connecting fiber 130. A plurality of concave-convex structures are formed on the surface of the connecting fiber 130. The concave-convex hydrophilic layer can increase surface roughness of the connecting fiber 130 to trap some fine particles and impurities in the water. Water droplets are less likely to remain on the concave-convex hydrophilic layer, and the water can be evaporated into the moisture more uniformly. The connecting fiber 130 has a larger surface area, such that the water can be evaporated more efficiently to achieve higher humidification efficiency.

The concave-convex hydrophilic layer is made of silicon dioxide. The silicon dioxide exhibits certain hydrophilicity, allowing the water to spread out on the concave-convex hydrophilic layer and form a relatively low contact angle. With the concave-convex hydrophilic layer made of the silicon dioxide, the hydrophilicity of the connecting fiber 130 can better meet the requirements. The silicon dioxide possesses certain antibacterial properties, which inhibits the growth of bacteria on the surface of the connecting fiber 130 to extend the service life of the humidifying woven fabric 10.

The connecting fiber 130 is provided with an antibacterial layer. An antibacterial agent is added to the connecting fiber 130. The antibacterial agent is inorganic, organic, or natural, and is, for example, copper, zinc, graphene, phenols, plant-extracted organic acids, or the like. The antibacterial layer is located on an outer surface of the connecting fiber 130. The antibacterial layer can further inhibit the growth of bacteria on the surface of the connecting fiber 130 to extend the service life of the humidifying woven fabric 10.

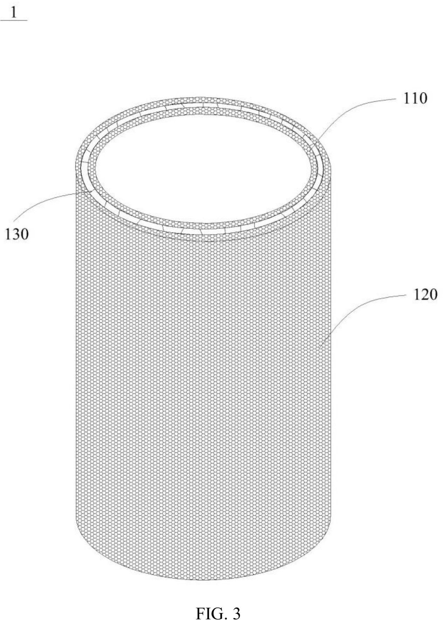

According to another aspect of the present disclosure, a core material configured for liquid impregnation is further provided. Referring to FIG. 1 and FIG. 3, the core material 1 includes the above humidifying woven fabric 10. The core material 1 includes a support body (not shown). The humidifying woven fabric 10 is disposed and supported on the support body. There is one humidifying woven fabric 10, and are also a plurality of humidifying woven fabrics 10. The plurality of humidifying woven fabrics 10 are laminated. The number of humidifying woven fabrics 10 is determined based on usage requirements. For example, the core material 1 includes two to six humidifying woven fabrics 10 that are laminated. The humidifying woven fabric 10 is adjusted correspondingly according to the shape of the core material 1. For example, when the core material 1 is cylindrical, the humidifying woven fabric 10 is rectangular and is connected end to end to form a cylinder. Two ends of the humidifying woven fabric 10 are connected by sewing. Since the humidifying woven fabric 10 adopts the technical solution in any one of the foregoing embodiments, the core material 1 has at least the beneficial effects brought about by the technical solution of the embodiment, which are not repeated herein one by one.

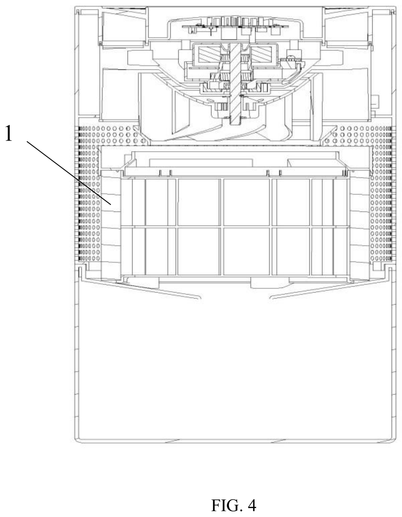

According to still another aspect of the present disclosure, a humidifier is further provided. As shown in FIG. 4, the humidifier includes the core material 1. The humidifier has at least the beneficial effects brought about by the technical solution of the above embodiment, which are not repeated herein one by one. In addition, the humidifier further includes an outer housing. The water sprinkler and the fan assembly are disposed in the outer housing. The water sprinkler is configured to sprinkle water onto the core material 1. The fan assembly is configured to blow air toward the core material 1, so as to improve the evaporation efficiency.

It should be understood that in the description of the present disclosure, orientation terms such as "front", "rear", "upper", "lower", "left", "right", "transverse", "longitudinal", "vertical", "horizontal", "top" and "bottom" indicate orientation or position relationships based on the drawings. Unless otherwise specified, these orientation terms are merely intended to facilitate or simplify the description of the present disclosure, rather than to indicate or imply that the mentioned device or element must have a specific orientation and must be constructed and operated in a specific orientation. Therefore, they should not be construed as a limitation to the scope of protection of the present disclosure. The orientation terms "inner" and "outer" refer to the inner and outer parts relative to the contour of the mentioned component.

For ease of description, the spatially relative terms, such as "above", "on the upper side of", "on the upper surface of", and "on", can be used to describe the spatial positional relationship between one or more components or features and another components or features in the drawings. It should be understood that the spatially relative terms are intended to encompass different orientations of the components in use or operation in addition to those shown in the figure. For example, if a component in the drawing is inverted as a whole, the case where a component is "above another component or feature" or "on another component or feature" shall include the cases where the component is "below another component or structure" or "under another component or structure". Therefore, the exemplary term "above" may include both orientations "above" and "below". In addition, these components or features may also be positioned at other different angles (for example, rotated by 90 degrees or other angles), and all such cases are intended to be included herein.

It should be noted that the terms used herein are for the purpose of describing particular embodiments only and are not intended to limit exemplary embodiments according to the present disclosure. As used herein, unless otherwise specified herein, the singular forms are also intended to include the plural forms. In addition, it should also be understood that when the terms "comprise" and/or "include" are used in this specification, they specify the presence of features, steps, operations, devices, components, and/or combinations thereof.

It should be noted that the terms "first", "second", and so on in the description and claims of the present disclosure and in the above accompanying drawings are intended to distinguish similar objects but do not necessarily indicate a specific order or sequence. It should be understood that the data used in such a way may be exchanged under proper conditions to make it possible to implement the described embodiments of the present disclosure in sequences except those illustrated or described herein.

The present disclosure has been illustrated through the above embodiments. However, it should be understood that the above embodiments are merely for the purposes of illustration and description, and are not intended to limit the present disclosure to the scope of the described embodiments. In addition, those skilled in the art will appreciate that the present disclosure is not limited to the above embodiments. Based on the teachings of the present disclosure, numerous variations and modifications may further be made, all of which fall within the scope of protection claimed by the present disclosure. The scope of protection of the present disclosure is defined by the appended claims and equivalents thereof.

## Claims

1. A humidifying woven fabric, **characterized by** comprising: a first mesh layer (110) and a second mesh layer (120), wherein the first mesh layer (110) is spaced apart from the second mesh layer (120); a connecting fiber (130) is disposed between the first mesh layer (110) and the second mesh layer (120); and the first mesh layer (110), the second mesh layer (120) and the connecting fiber (130) have a water retentivity; and
the water retentivity of the connecting fiber (130) is greater than or equal to a water retaining capacity per unit weight being 1.2 g/g; and the water retentivity of the first mesh layer (110) is greater than or equal to a water retaining capacity per unit weight being 1.2 g/g.

2. The humidifying woven fabric according to claim 1, **characterized in that** a first opening (1110) is formed in the first mesh layer (110); a second opening (1210) is formed in the second mesh layer (120); the first opening (1110) at least partially corresponds to the second opening (1210); and the connecting fiber (130) is connected between an outer edge (1120) of the first opening and an outer edge (1220) of the second opening.

3. The humidifying woven fabric according to claim 2, **characterized in that** the outer edge (1120) of the first opening is provided with a plurality of first holes (1130); the outer edge (1220) of the second opening is provided with a plurality of second holes (1230); and the connecting fiber (130) extends between the first holes (1130) and the second holes (1230).

4. The humidifying woven fabric according to claim 1, **characterized in that** the water retaining capacity per unit weight of the connecting fiber (130) ranges from 1.2 g/g to 2.8 g/g.

5. The humidifying woven fabric according to claim 1, **characterized in that**
the connecting fiber (130) is a synthetic fiber; or,
the connecting fiber (130) is a natural fiber; or,
the connecting fiber (130) is a regenerated fiber.

6. The humidifying woven fabric according to claim 1, **characterized in that** a concave-convex hydrophilic layer is formed on a surface of the connecting fiber (130).

7. The humidifying woven fabric according to claim 6, **characterized in that** the concave-convex hydrophilic layer is made of silicon dioxide.

8. The humidifying woven fabric according to claim 1, **characterized in that** the connecting fiber (130) is provided with an antibacterial layer.

9. A core material configured for liquid impregnation, **characterized by** comprising the humidifying woven fabric (10) according to any one of claims 1 to 8.

10. A humidifier, **characterized by** comprising the core material (1) according to claim 9.
